# EUROPEAN PATENT SPECIFICATION

(11) **EP 3 267 189 B1**
(45) Date of publication and mention of the grant of the patent: **15.01.2020**
(21) Application number: 16758627.0
(22) Date of filing: 01.03.2016
(51) Int. Cl.: G01N 29/04, G01N 21/84, G01N 21/88, G01N 29/265, G01M 5/00, G01M 11/08, B64C 39/02

(54) **DEFECT INSPECTION DEVICE, DEFECT INSPECTION METHOD, AND PROGRAM**
DEFEKTINSPEKTIONSVORRICHTUNG, DEFEKTINSPEKTIONSVERFAHREN UND PROGRAMM
DISPOSITIF AINSI QUE PROCÉDÉ D'INSPECTION DE DÉFAUTS, ET PROGRAMME

(30) Priority: 04.03.2015 JP 2015042176
(43) Date of publication of application: 10.01.2018
(73) Proprietor: NEC Corporation, Tokyo 108-8001 (JP)
(72) Inventor: SHIMIZU, Motoaki, Tokyo 108-8001 (JP)
(74) Representative: Vossius & Partner Patentanwälte Rechtsanwälte mbB
(86) International application number: PCT/JP2016/001095
(87) International publication number: WO 2016/139929

(56) References cited:
- WO-A1-2012/013878
- CN-A- 101 604 830
- DE-A1-102005 020 593
- GB-A- 2 455 374
- JP-A- 2005 265 710
- JP-A- 2008 095 477
- JP-A- 2012 145 346
- US-B1- 8 874 283
- ALBERT ALBERS ET AL: "Semi-autonomous flying robot for physical interaction with environment", ROBOTICS AUTOMATION AND MECHATRONICS (RAM), 2010 IEEE CONFERENCE ON, IEEE, PISCATAWAY, NJ, USA, 28 June 2010 (2010-06-28), pages 441-446, XP031710205, ISBN: 978-1-4244-6503-3

## Description

### [Technical Field]

The present invention relates to a defect inspection device, a defect inspection method, and a program suitable for use in defect inspection of structures such as tunnels and bridges.

### [Background Art]

As a defect inspection device for inspecting defects over wall surfaces of inspection structures such as tunnels and bridges using a moving body, defect inspection devices as described in PTL 1, PTL 2, and PTL 3 are known. PTL 1 discloses a defect inspection device having a moving device mounted on a vehicle and configured to inspect a tunnel state by moving a tracking vehicle at a predetermined speed to pick up a tapping sound while causing a head to follow an inspection surface. PTL 2 discloses a defect inspection device having a post mounted on a general vehicle such as a truck, and having a hammer attached to an end of an arm at an upper end of the post, and configured to inspect a tunnel state by tapping a surface of a tunnel lining concrete. PTL 3 discloses a defect inspection device configured to inspect a tunnel state by setting a robot body in a movable state by a moving cart, the moving cart including an arm mechanism and an inspection mechanism part, etc., and making the inspection mechanism part reach a desired position on a wall surface.

US 8 874 283 B1 relates to a drone for inspection and a method of use wherein the drone is utilized in an enclosed space and is capable of being controlled with or without line of sight to the aircraft. The drone may land on generally horizontal or vertical surfaces.

JP 2008 095477 A relates to an equipment for inspecting and diagnosing outdoor high-rise building using moored balloon. The equipment comprises an optical inspecting and a diagnosing equipment and its directional apparatus for directing the same; a mooring balloon equipped with a loading condition controller for controlling them; a mooring rope winder for changing the altitude of the mooring balloon; and a ground controller for remotely operating the equipment loaded to the balloon from the ground.

GB 2 455 374 A relates to an Unmanned Aerial Vehicle, UAV, comprising a triangular array of rotors. The UAV comprises an airframe supporting a triangular array of tri-rotors. Each tri-rotor comprises a pair of contra-rotating rotors on the same axis. Each rotor has a dedicated motor arranged such that in the event of a motor failure all motors on that level will be disengaged. The airframe comprises three arms with one pair of rotors at the extremity of each, and the arms and rotors detachable for stowage. The UAV also comprises a stowable antenna and an undercarriage comprising three legs. The UAV operates autonomously and carries a video camera to transmit images to a guidance controller.

WO 2012/013878 A1 relates to a device for non-destructively checking structures, and measuring the thicknesses of structures using an ultrasonic probe. The device comprises a drone, capable of hovering flight and which can be manually and remotely piloted by an operator using a remote control, as well as an onboard measurement probe which is connected to the drone by connection means. The connection means enable the measurement probe, in contact with a surface of a structure to be checked, to be positioned and temporarily immobilized while piloting the drone.

CN 101 604 830 A relates to an unmanned helicopter system for patrolling trolly wire routes and towers and a method thereof. The unmanned helicopter system adopts an unmanned helicopter carrying a detection device, a control device and a communication device, and patrols the trolly wire routes and the towers along a trolly wire route passage. The method can cope with complex and changeable surface features to finish detecting the defects of the devices of the trolly wire routes and the towers. The structure of the unmanned helicopter system comprises an unmanned helicopter, a remote controller and a ground control car, wherein, the unmanned helicopter is provided with a flight control system and a patrolling detection system; the two systems are both wirelessly communicated with the ground control car; the ground control car remotely carries out remote control for the unmanned helicopter and analyzes and processes patrolling detection results.

JP 2012 145346 A relates to a system for detecting the lifting of the outer wall of the building composed of a detection device arranged on the outside of the building and a monitoring/operating device for remotely operating the detection device. The detection device is mounted on the moving flight vehicle and composed of a percussion hammer, a moving flight vehicle operation receiver, a sound collection device and a tapping sound transmitter. The monitoring/operating device is composed of a moving flight vehicle operation transmitter, a tapping sound receiver and a speaker. The moving flight vehicle on which the percussion hammer is mounted is remotely operated from a remote place, the outer wall of the building is properly tapped by the percussion hammer, the tapping sound is collected by the sound collection device, the collected tapping sound is outputted from the speaker on the remote place to specify a position on which lifting of the outer wall of the building is generated.

### [Citation List]

### [Patent Literature]

[PTL 1] Japanese Laid-open Patent Publication No. 2001-349876
[PTL 2] Japanese Laid-open Patent Publication No. 2004-205216
[PTL 3] Japanese Laid-open Patent Publication No. 2004-301665
[PTL 4] Utility Model Registration No. 3125546
[PTL 5] Japanese Laid-open Patent Publication No. 2006-264566
[PTL 6] Japanese Laid-open Patent Publication No. 1998-060938
[PTL 7] Japanese Laid-open Patent Publication No. 1992-128439

### [Summary of Invention]

### [Technical Problem]

However, the moving bodies disclosed in PTL 1 to PTL 3 are assumed to be vehicles traveling on the ground. In the vehicles traveling on the ground, it is difficult to easily inspect the wall surfaces of tunnels and bridges. Further, when defect inspection is performed to detect cracking or marking by capturing images of an inspection structure simultaneously with the defect inspection such as tapping the inspection structure, an inspection efficiency is improved and reliable defect inspection can be performed. However, when an inspection unit for tapping inspection and an imaging unit for cracking and marking inspection are mounted on a flying body, the weight of the flying body is increased, thus involving a weight balance problem.

An object of the present invention is to provide a defect inspection device, a defect inspection method and a program capable of solving the above-mentioned problem.

### [Solution to Problem]

In order to solve the above-mentioned problem, according to an aspect of the present invention, there is provided a defect inspection device according to claim 1.

According to an aspect of the present invention, there is provided a defect inspection method according to claim 4.

According to an aspect of the present invention, there is provided a defect inspection program according to claim 5.

### [Advantageous Effects of Invention]

According to the present invention, an inspection means and an imaging means for performing tapping inspection are mounted on a flying body which is capable of freely moving in the space. Therefore, from the captured image, the defect inspection device is capable of detecting cracking on the wall surface and marking for identifying a deformed place found by the previous inspection, so that a defect inspection can be performed at such cracking or marking points. As a result, inspection time can be shortened.

### [Brief Description of Drawings]

FIG. 1 is a perspective diagram illustrating an entire configuration of a defect inspection device according to a first example embodiment of the present invention.
FIG. 2 is an explanatory diagram of a structure of the defect inspection device according to the first example embodiment of the present invention.
FIG. 3 is a block diagram illustrating an internal configuration of the defect inspection device according to the first example embodiment of the present invention.
FIG. 4 is a flowchart illustrating a defect inspecting operation using the defect inspection device according to the first example embodiment of the present invention.
FIG. 5 is an explanatory diagram of an arrangement position of each unit of a defect inspection device.

### [Description of Embodiments]

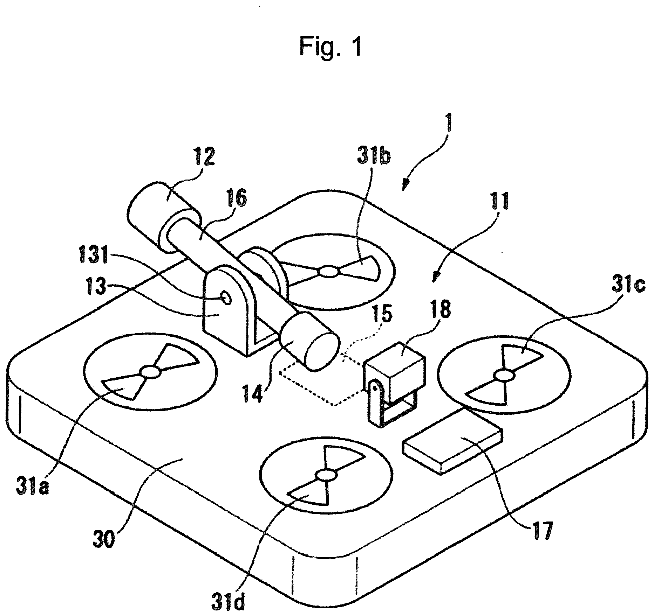

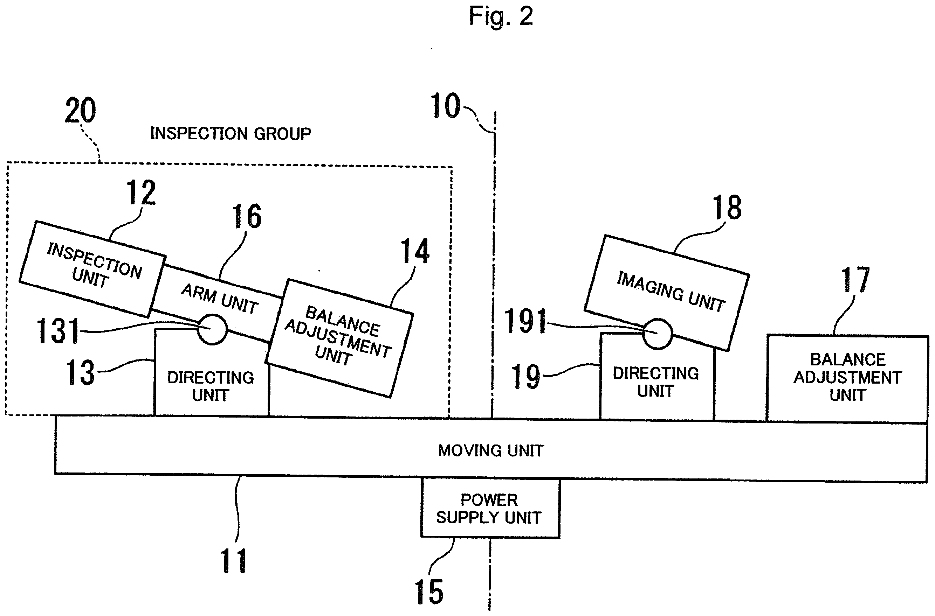

Example embodiments of the present invention will be described hereafter, with reference to the drawings. FIG. 1 is a perspective diagram illustrating an entire configuration of a defect inspection device 1 according to a first example embodiment of the present invention. FIG. 2 is an explanatory diagram of a structure of the defect inspection device according to the first example embodiment of the present invention. As illustrated in FIG. 1 and FIG. 2, the defect inspection device 1 according to the first example embodiment of the present invention includes: a moving unit 11, an inspection unit 12, a directing unit 13(a first directing unit), a balance adjustment unit 14, a power supply unit 15, an arm unit 16, a balance adjustment unit 17, an imaging unit 18, a directing unit 19 (a second directing unit).

As illustrated in FIG. 1, the moving unit 11 enables a space movement as a flying body by arranging plural rotary blades 31a to 31d on a base 30. In this example, four rotary blades 31a to 31d are arranged on the base 30. When the rotary blades 31a to 31d are rotated, a lift force is generated, so that an entire defect inspection device 1 is floated as a flying body. Further, by controlling a rotational speed and the rotational direction of each of the rotary blades 31a to 31d, a flying height, a direction, a speed, etc. of the defect inspection device 1 can be freely controlled. As a result, the entire defect inspection device 1 can be brought close to a wall surface of an inspection target of an inspection structure such as a tunnel or a bridge. Here, four rotary blades 31a to 31d are arranged on the base 30. However, the number of rotary blades and the shape of the base 30 are not limited thereto.

The directing unit 13 is attached to the moving unit 11. The directing unit 13 is a gimbal that rotates in, for example, an azimuth (AZ) or an elevation (EL) direction. The arm unit 16 is rotatably attached to a rotation shaft 131 of the directing unit 13. The inspection unit 12 is attached to one end of the arm unit 16. The balance adjustment unit 14 is attached to the other end of the arm unit 16.

The inspection unit 12 inspects the wall surface of the inspection target area of the inspection structure. In this example, the inspection unit 12 taps the wall surface of the inspection target area of the inspection structure, monitors a sound from the wall surface generated by such tapping, and detects a defect state of the wall surface. The directing unit 13 is a unit that determines a direction and a position of the inspection unit 12 so that the inspection unit 12 is brought into contact with the wall surface which is an inspection target. The arm unit 16 is a unit that secures a distance from the rotation shaft 131 of the directing unit 13 to the tip of the inspection unit 12, so that the inspection unit 12 attached to one end of the arm unit 16 can be brought into contact with the inspection target.

As illustrated in FIG. 2, the directing unit 13 is attached to the moving unit 11, so as to be biased in either direction from a horizontal center line 10 of a fuselage (base 30) of the moving unit 11. Specifically, in FIG. 2, for example when a left side is assumed to be a front side, the directing unit 13 is attached to the moving unit 11 so as to be biased in such a manner as approaching a front side end from a horizontal center line 10 of the fuselage of the moving unit 11. According to the invention, the directing unit 13 is attached to the moving unit 11 so as to be biased away in a horizontally outward direction from a position of the center of gravity of the fuselage (base 30) of the moving unit 11 as a reference. Further, the arm unit 16 is attached to the rotation shaft 131 of the directing unit 13 so that the inspection unit 12 protrudes from the tip of the moving unit 11. The balance adjustment unit 14 with the inspection unit 12 attached thereto, is a counter weight for keeping a balance of the arm unit 16 at a position of the rotation shaft 131 of the directing unit 13.

A power supply unit 15 is provided on the rear side of the moving unit 11. The power supply unit 15 is a wired power supply from, for example, a battery, a generator on the ground, or a household socket. Further, various circuit boards such as a control unit and a transmission unit / reception unit can be arranged in the portion of the power supply unit 15. The power supply unit 15 is arranged at a position of the center of gravity of the moving unit 11 so as not to affect a mass balance.

The balance adjustment unit 17 is a counter weight for keeping the mass balance at a horizontal center (or center of gravity) of the moving unit 11. In other words, in this example embodiment, the directing unit 13, the arm unit 16, the inspection unit 12, and the balance adjustment unit 14 are provided on the front side of the moving unit 11. Therefore, the weight on the front side gets heavier. Accordingly, in order to keep the mass balance at the center (or the center of gravity) of the defect inspection device 1 in the horizontal direction, the balance adjustment unit 17 is arranged on the rear side of the moving unit 11. The position and the weight of the balance adjustment unit 17 are determined together with the directing unit 13, the arm unit 16, the inspection unit 12, and the balance adjustment unit 14, including the imaging unit 18 and the directing unit 19, so as to keep the mass balance at a horizontal center (or center of gravity) of the defect inspection device 1.

The imaging unit 18 is, for example, a visible camera or an infrared camera. The imaging unit 18 captures images of the wall surface to be inspected in each photographing range, and detects cracking or marking of the wall surface from the captured image.

The directing unit 19 is a gimbal that rotates in, for example, an azimuth (AZ) or an elevation (EL) direction. The imaging unit 18 is rotatably attached to the rotation shaft 191 of the directing unit 19. According to the invention, the directing unit 19 is attached biased away from the horizontal center line 10 of the fuselage of the moving unit 11 in the opposite direction to the directing unit 13. In other words, in this example, the directing unit 19 is mounted so as to be biased to the rear side from the horizontal centerline 10 of the fuselage of the moving portion 11. By attaching the directing unit 19 to the rear side from the horizontal center line 10 of the fuselage of the moving unit 11, the imaging unit 18 and the directing unit 19 have the effect of the counter weight, and the weight of the balance adjusting unit 17 can be reduced. In a device not being part of the invention, the directing unit 19 may also be arranged on the horizontal centerline 10 of the fuselage or the horizontal center of gravity of the moving unit 11. In a case of the flying body, there is a change in the attitude angle of the flying body, and the variation of its attitude angle becomes large especially when the wind is strong. When the directing unit 19 is arranged at a position biased from the horizontal center line 10 of the fuselage or the horizontal center of gravity of the moving unit 11, a blur is generated in the captured image when fluctuation due to displacement occurs in the imaging unit 18 because of the variation of the fuselage attitude angle.

In this example, one balance adjustment unit 17 is arranged on the rear side of the moving unit 11. However, it is also acceptable to arrange the balance adjustment unit at the front, rear, right and left of the moving unit 11, for keeping the mass balance at the horizontal center (or the center of gravity) of the moving unit 11.

Further, in this example, the power supply unit 15 is mounted along the horizontal center line 10 (or center of gravity) of the fuselage of the moving unit 11 so as not to affect the mass balance. However, the power supply unit 15 is not required to be mounted along the horizontal center line 10 of the fuselage of the moving unit 11. In this case, the position and the weight of the balance adjustment unit 17 are determined to keep the mass balance along the horizontal center line 10 (or the center of gravity line) of the defect inspection device 1, together with the direction unit 13, the arm unit 16, the inspection unit 12, the balance adjustment unit 14, the imaging unit 18, a directing unit 19, including the power supply unit 15.

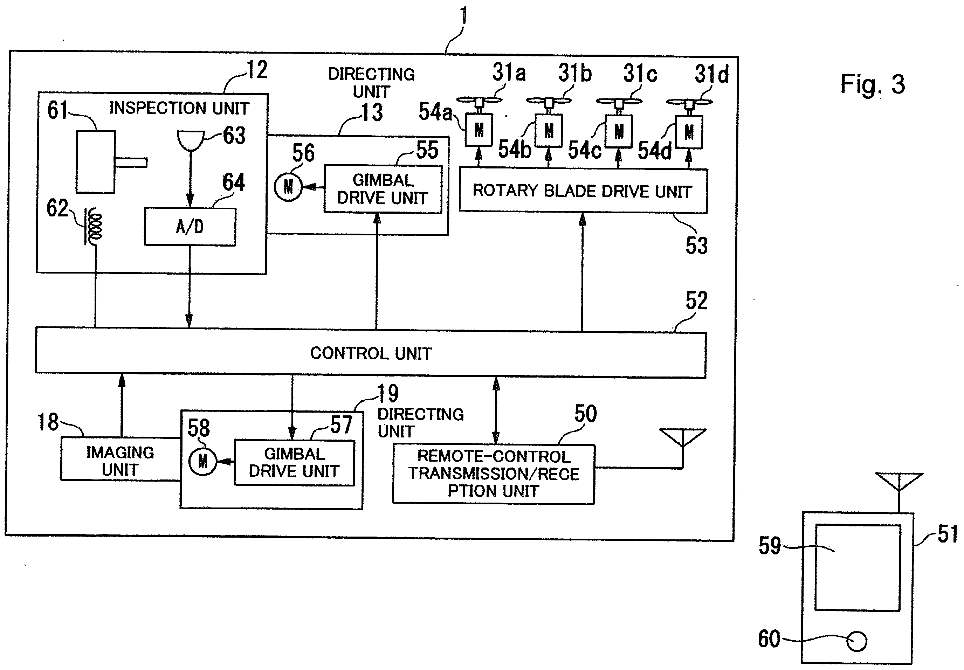

FIG. 3 is a block diagram illustrating an internal configuration of the defect inspection device 1 according to a first example embodiment of the present invention. Directions of arrows in the diagram show an example and don't limit a direction of a signal between blocks. In FIG. 3, a remote-control transmission unit / reception unit 50 transmits and receives an operation signal to / from a remote controller 51. The remote controller 51 is used when an operator remotely operates the defect inspection device 1 wirelessly. The remote controller 51 is provided with a display 59 and an operation unit 60. As the remote controller 51, a dedicated remote controller may be provided, or a dedicated application may be installed in a general-purpose mobile terminal so that it can be used as a remote controller. Further, various analyzers and monitors may be added to the remote controller 51. The control unit 52 controls an overall operation of the defect inspection device 1. A unit in which a CPU (Central Processing Unit) and various memories are integrated, can be used as the control unit 52. In this example, the defect inspection device 1 is remotely operated wirelessly by the remote controller 51. However, the defect inspection device 1 may be operated by wire.

A rotary blade drive unit 53 drives the rotary blade motors 54a to 54d. The rotary blade motors 54a to 54d are motors for rotating the rotary blades 31a to 31d. Drive signals are supplied to the rotary blade motors 54a to 54d from the control unit 52 via the rotary blade drive unit 53.

A gimbal drive unit 55 drives a gimbal motor 56. The gimbal motor 56 is a motor for rotating a gimbal of the directing unit 13. A drive signal is supplied to the gimbal motor 56 from the control unit 52 via the gimbal drive unit 55.

The gimbal drive unit 57 drives the gimbal motor 58. The gimbal motor 58 is a motor that rotates the gimbal of the directing unit 19 for setting the direction of capturing images performed by the imaging unit 18. A drive signal is supplied to the gimbal motor 58 from the control unit 52 via the gimbal drive unit 57.

A hammer 61, a solenoid 62, a microphone 63, and an A / D (Analog to Digital) converter 64 constitute the inspection unit 12. The hammer 61 performs tapping inspection by adding an impact to an inspection target. The solenoid 62 gives a force to tap the wall surface to be inspected using the hammer 61 and also to return the hammer 61 to an original position. The microphone 63 picks up the tapping sound generated at the time of tapping the wall surface using the hammer 61. The drive signal from the control unit 52 is supplied to the solenoid 62. Further, the sound picked up by the microphone 63 is inputted to the control unit 52 via the A / D converter 64, and processed by the control unit 52. Information regarding the picked up sound can be sent from the control unit 52 to the remote controller 51 side via the remote-control transmission unit / reception unit 50.

Further, the captured image of the imaging unit 18 is inputted to the control unit 52 and processed by the control unit 52. Information regarding the captured image can be sent from the control unit 52 to the remote controller 51 side via the remote-control transmission / reception unit 50, and the captured image of the imaging unit 18 can be displayed on a display 59.

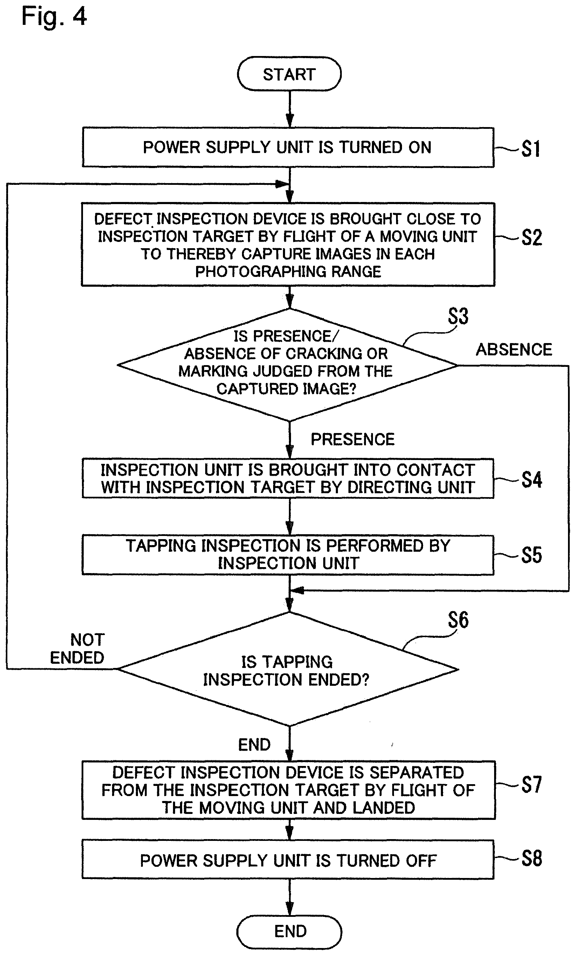

A defect inspecting operation using the defect inspection device 1 of this example embodiment will be described next. FIG. 4 is a flowchart illustrating the defect inspecting operation using the defect inspection device 1 according to the first example embodiment of the present invention.

First, the operator turns on the power supply unit 15 (step S1). Then, the operator operates the remote controller 51 to make the defect inspection device 1 brought close to the inspection target by the flight of the moving unit 11 to thereby capture images of the inspection target in each photographing range by the imaging unit 18 (step S2). The operator judges presence or absence of cracking or marking from the captured image by visual inspection or the like by an inspector (step S3). When there is cracking or marking in step S3, the operator moves the directing unit 13 by operating the remote controller 51 to make the inspection unit 12 brought into contact with the inspection target (step S4). When the inspection unit 12 is brought into contact with the inspection target, the operator taps the inspection target using the hammer 61 of the inspection unit 12 by operating the remote controller 51, and the sound at that time is picked up by the microphone 63, to thereby perform the defect inspection by tapping (step S5). When there is no cracking or marking in step S3 or after the processing in step S5, the operator judges whether the inspection such as tapping has ended (step S6). When the inspection such as tapping is not ended, the process is returned to step S2. When the tapping inspection is ended, the operator causes the defect inspection device 1 to be separated from the inspection target by the flight of the moving unit 11, and landed at a predetermined position (step S7). Then, the operator turns off the power supply unit 15 to end the inspection (step S8).

As described above, in the first example embodiment of the present invention, plural rotary blades 31a to 31d are arranged on the base 30 to constitute the moving unit 11, and the inspection unit 12 is arranged in this moving unit 11. As a result, the defect inspection such as tapping using the flying body can be performed, and the defect inspection can be easily performed over the wall surfaces of the tunnels and bridges at a low cost.

Further, in this example embodiment, as illustrated in FIG. 2, the directing unit 13 is mounted so as to be biased to the front side from the horizontal center line 10 of the fuselage of the moving unit 11. Therefore, a length of the arm unit 16 can be shortened, and a weight of the arm unit 16 can be reduced.

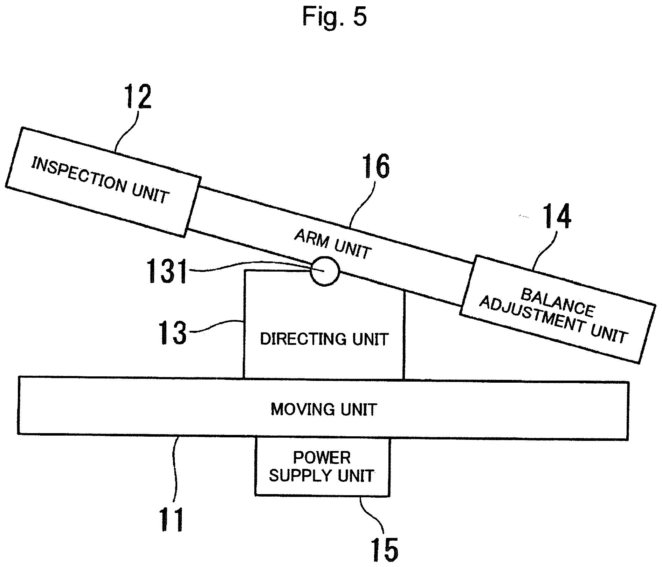

FIG. 5 is an explanatory diagram of the arrangement position of each unit of the defect inspection device related to a first example not being part of the invention since the directing unit 13 is mounted on a horinzontal center line or center of gravity of the flying body. When the directing unit 13 is arranged on the moving unit 11, as illustrated in FIG. 5, it is conceivable to arrange the directing unit 13 at the center of the moving unit 11 in order not to affect the mass balance. However, when the directing unit 13 is arranged at the center of the moving unit 11, the inspection unit 12 cannot be brought into contact with position of the inspection target of the inspection structure, unless the arm unit 16 is made long. In contrast, in this example embodiment, as illustrated in FIG. 2, the directing unit 13 is mounted so as to be biased to the front side from the horizontal center line 10 of the fuselage of the moving unit 11, and therefore even when the length of the arm unit 16 is shortened, the inspection unit 12 can be brought into contact with the position of the inspection target of the inspection structure.

Further, in this example embodiment, the arm unit 16 whose weight is reduced, is mounted on the directing unit 13, and therefore a mounting weight of the directing unit 13 is reduced, and a structural strength of the directing unit 13 can be reduced. Therefore, the weight of the directing unit 13 can be reduced together with the arm unit 16. Due to a weight reduction of the arm unit 16 and a weight reduction of the directing unit 13, the weight of the moving unit 11 can be reduced, and the structural strength of the moving unit 11 itself can also be reduced. Thus, an overall weight reduction is achieved. As a result, the moving unit 11 can be floated with a margin even when the fuselage (the inspection unit 12, the directing unit 13, the power supply unit 15, the balance adjustment unit 14, the arm unit 16, the balance adjustment unit 17, the imaging unit 18, the directing unit 19) for performing defect inspection such as tapping is mounted on the moving unit 11. Further, when a battery is installed in the power supply unit 15, the defect inspection can be performed with sufficient flight time secured, even when a large capacity battery is not installed.

Further, in this example embodiment, the balance adjustment unit 14 is provided with the inspection unit 12 attached thereto so that the arm unit 16 keeps the mass balance at the position of the rotation shaft 131 of the directing unit 13. Therefore, the rotation shaft 131 of the directing unit 13 is arranged.at the position of the center of gravity when the inspection unit 12, the arm unit 16, and the balance adjustment unit 14 are regarded as one object. Thereby, generation of a counter torque due to the rotation of the arm unit 16 is preferably eliminated, and the variation of the attitude angle of the moving unit 11 is preferably reduced.

Further in this example embodiment, while moving the moving unit 11, the imaging unit 18 can capture the images of the wall surface to be inspected in each photographing range, and cracking or marking can be detected. In this case, from the captured image, cracking on the wall surface or marking for identifying a deformed part during the previous inspection can be detected, and the moving unit 11 can be stopped at the cracking and marking points to perform defect inspection such as tapping. By performing defect inspection such as tapping only at the cracking and marking points, the inspection time can be shortened.

When there is no imaging unit 18, the cracking and marking points cannot be detected, and therefore the defect inspection such as tapping is performed over the entire wall surface to be inspected regardless of the presence or absence of cracking or marking, resulting in greatly increasing the inspection time.

When capture of the images by the imaging unit 18 and the inspection by the tapping sound, etc., are both performed by the inspection unit 12, for example the imaging unit 18 is oriented in a direction opposite to the inspection unit 12 with the horizontal center line 10 of the fuselage as a reference. By doing so, the inspection group 20 (the inspection unit 12, the arm unit 16, the balance adjustment unit 14, the directing unit 13) does not appear in the imaging range of the imaging unit 18. Thus, the presence or absence of cracking or marking can be reliably judged. However, in this case, when the inspection is switched from capturing images of the wall surface to the defect inspection such as tapping the wall surface of the inspection target, the moving unit 11 is required to be inverted in the horizontal direction.

In contrast, when the imaging unit 18 is oriented in the same direction as the inspection unit 12, the inspection group 20 is required to be prevented from appearing in an angle of view of the imaging unit 18. In order to prevent the inspection group 20 from appearing in the angle of view of the imaging unit 18, a directional angle of the imaging unit 18 may be set by the directing unit 19 to an angle obtained by adding one half of the angle of view of the imaging unit 18 to a directional angle directed from the horizontal to a highest point of the inspection group 20. In this case, when the inspection is switched from capturing images of the wall surface to be inspected to the defect inspection such as tapping the wall surface of the inspection target, the moving unit 11 is not required to be inverted in the horizontal direction, and the inspection time can be shortened.

In this example embodiment, the imaging unit 18 is attached to the moving unit 11 via the directing unit 19. The directing unit 19 is attached in a direction biased from the horizontal center line 10 of the fuselage of the moving unit 11 in the opposite direction to the directing unit 13. Therefore, the orientation of the imaging unit 18 can be oriented in the direction of the inspection unit 12 or can be oriented in the direction opposite to the inspection unit 12. Further, when the imaging unit 18 is oriented in the same direction as the inspection unit 12, the directional angle of the imaging unit 18 can be set so as to prevent the inspection group 20 from appearing in the angle of view of the imaging unit 18. Further, by attaching the directing unit 19 so as to be biased in the opposite direction to the directing unit 13, the imaging unit 18 and the directing unit 19 have the effect of the counterweight, and the weight of the balance adjustment unit 17 can be reduced.

As described above, in this example embodiment, the defect inspection such as tapping using the flying body, and capturing images of the inspection target area, can be performed simultaneously. Further in this example embodiment, a case of performing tapping inspection as a wall surface inspection by the inspection unit 12, has been described. However, the present invention is not limited to the tapping inspection, and a void inspection for an inside of a wall using ultrasonic pulses (Japanese Patent Laid-Open No. 2001-021541) or a defect inspection for an inside of a wall using lights such as infrared rays (Japanese Patent Application Laid-Open No. 2001-201474) may also be used.

Further, in this example embodiment, plural rotary blades 31a to 31d are arranged on the base 30 so that the moving unit 11 can move in the space. However, the configuration of the moving unit 11 is not limited to the configuration using the rotary blades, and the moving unit 11 having a fixed blade may also be used. By using the rotary blades, movement and hovering are enabled, thus enabling the movement to the inspection target to perform defect inspection such as tapping the inspection target.

In contrast, by using the fixed blades, although hovering is difficult, the defect inspection can be performed by moving to the inspection target with a high speed flight, and the defect inspection such as tapping can be performed with a low speed flight.

A basic configuration of the defect inspection device of this example embodiment is as illustrated in FIG. 2. In other words, the defect inspection device of this example embodiment includes: the moving unit 11 capable of freely moving in the space; the inspection unit 12 that inspects the wall surface of the inspection target area of the inspection structure; and the arm unit 16 to which the inspection unit is attached at one end, and further includes the first directing unit 13 that controls the direction of the inspection unit 12 by rotating the arm unit 16, the imaging unit 18 that captures images of the inspection target area of the inspection structure, and the second directing unit 19 that controls the direction of capturing images performed by the imaging unit 18 by rotating the imaging unit 18.

As described above, example embodiments of the present invention have been described in detail with reference to the drawings, but a specific configuration is not limited to these example embodiments, and includes design changes in a range not departing from the gist of the present invention.

In the first example embodiment, the balance adjustment unit 17 is provided. However, the balance adjustment unit 17 is not required when the center of gravity of the moving unit 11 is not at the center but on the opposite side of the inspection unit 12 interposing the center, or when the imaging unit 18 is provided at the end of the moving unit 11 or the like. Further, the balance adjustment unit 14 is not required when the opposite side of the arm unit 16 with respect to the inspection unit 12 is made longer. Further, in the first example embodiment, the power supply unit 15 is provided. However, the power supply unit 15 is not required when power transmission is performed by wire or wireless.

As described above, example embodiments of the present invention have been described in detail with reference to the drawings, but a specific configuration is not limited to these example embodiments, and includes design changes in a range not departing from the scope of the present invention.

This application claims the priority based on Japanese Patent Application No. 2015-042176 filed on Mar. 4, 2015.

### [Reference signs List]

- 1: Defect inspection device
- 11: Moving unit
- 12: Inspection unit
- 13: Directing unit
- 14: Balance adjustment unit
- 15: Power supply unit
- 16: Arm unit
- 17: Balance adjustment unit
- 18: Imaging unit
- 19: Directing unit
- 30: Base
- 31a to 31d: Rotary blade

## Claims

1. A defect inspection device, comprising:
a flying body (11) capable of freely moving in the space;
an inspection means (12) for inspecting a wall of an inspection target area of an inspection structure provided on the flying body (11);
an arm means (16) to which the inspection means (12) is attached at one end; and
a first directing means (13) having a rotation shaft (131) for controlling a direction of the inspection means by rotating the arm means (16);
an imaging means (18) which is provided on the flying body (11) and captures images of the inspection target area of the inspection structure; and
a second directing means (19) for controlling a direction of capturing images performed by the imaging means (18), by rotating the imaging means (18),
wherein the first directing means (13) is mounted on the flying body (11) so as to be biased away in any direction from a horizontal center or center of gravity of the flying body (11),
wherein the second directing means (19) is mounted on the flying body (11) so as to be biased away in the direction opposite to the direction in which the first directing means (13) is mounted,
wherein a first balance adjustment means (17) is provided for adjusting a mass balance so that the flying body (11) is balanced at the center position or the center of gravity position,
wherein the rotation shaft (131) is arranged at the position of a center of gravity of an object, wherein said object comprises the inspection means (12), the arm means (16), and a second balance adjustment means (14).

2. The defect inspection device according to claim 1, wherein the imaging means (18) is capable of capturing images of the inspection target area of the inspection structure, so as to be oriented in the same direction as the inspection means.

3. The defect inspection device according to any one of claims 1 to 2, wherein the inspection means (12) performs a tapping inspection of the wall surface, a void inspection for an inside of the wall or a defect inspection for the inside of the wall.

4. A defect inspection method using a defect inspection device comprising: a flying body (11) capable of freely moving in the space; an inspection means (12) for inspecting a wall of an inspection target area of an inspection structure provided on the flying body (11); an arm means (16) to which the inspection means (12) is attached at one end; a first directing means (13) having a rotation shaft (131) for controlling a direction of the inspection means by rotating the arm means (16); an imaging means (18) which is provided on the flying body (11) and captures images of the inspection target area of the inspection structure; and a second directing means (19) for controlling a direction of capturing images performed by the imaging means (18) by rotating the imaging means (18),
wherein the first directing means (13) is mounted on the flying body (11) so as to be biased away in any direction from a horizontal center or center of gravity of the flying body (11),
wherein the second directing means (19) is mounted on the flying body (11) so as to be biased away in the direction opposite to the direction in which the first directing means (13) is mounted,
wherein a first balance adjustment means (17) is provided for adjusting a mass balance so that the flying body (11) is balanced at the center position or the center of gravity position,
wherein the rotation shaft (131) is arranged at a position of the center of gravity of an object, wherein said object comprises the inspection means (12), the arm means (16), and a second balance adjustment means (14),
the method including:
making the inspection means (12) brought close to the inspection structure by the flying body (11);
capturing images of the inspection target areas of the inspection structure by the imaging means (18), and
making the inspection means (12) brought into contact with the inspection target area of the inspection structure using the first directing means (13), to thereby inspect the wall of the inspection structure by the inspection means (12).

5. A defect inspection program, which causes a defect inspection device including a flying body (11) capable of freely moving in the space; an inspection means (12) for inspecting a wall of an inspection target area of an inspection structure provided on the flying body (11);
an arm means (16) to which the inspection means (12) is attached at one end; a first directing means (13) having a rotation shaft (131) for controlling a direction of the inspection means (12) by rotating the arm means (16); an imaging means (18) which is provided on the flying body (11) and captures images of the inspection target area of the inspection structure; and a second directing means (19) for controlling a direction of capturing images performed by the imaging means (18) by rotating the imaging means (18),
wherein the first directing means (13) is mounted on the flying body (11) so as to be biased away in any direction from a horizontal center or center of gravity of the flying body (11),
wherein the second directing means (19) is mounted on the flying body (11) so as to be biased away in the direction opposite to the direction in which the first directing means (13) is mounted,
wherein a first balance adjustment means (17) is provided for adjusting a mass balance so that the flying body (11) is balanced at the center position or the center of gravity position,
wherein the rotation shaft (131) is arranged at the position of a center of gravity of an object,
wherein said object comprises the inspection means (12), the arm means (16), and a second balance adjustment means (14),
to function as:
a means for making the inspection means (12) brought close to the inspection structure by controlling the flying body (11); and
a means for capturing images of the inspection target area of the inspection structure by controlling the imaging means (18); and
a means for making the inspection means (12) brought into contact with the inspection target area of the inspection structure by controlling the first directing means (13), to thereby inspect the wall of the inspection structure by the inspection means (12).

## Patentansprüche

1. Defektinspektionsvorrichtung mit:
einem Flugkörper (11), der in der Lage ist, sich frei im Raum zu bewegen;
einer auf dem Flugkörper (11) bereitgestellten Inspektionseinrichtung (12) zum Inspizieren einer Wand eines Inspektionszielbereichs einer zu inspizierenden Struktur;
einer Armeinrichtung (16), an der die Inspektionseinrichtung (12) an einem Ende befestigt ist; und
einer ersten Ausrichtungseinrichtung (13) mit einer Drehwelle (131) zum Steuern einer Richtung der Inspektionseinrichtung durch Drehen der Armeinrichtung (16);
einer Bildaufnahmeeinrichtung (18), die auf dem Flugkörper (11) vorgesehen ist und Bilder des Inspektionszielbereichs der zu inspizierenden Struktur aufnimmt; und
einer zweiten Ausrichtungseinrichtung (19) zum Steuern einer Aufnahmerichtung zum Aufnehmen von Bildern durch die Bildaufnahmeeinrichtung (18), durch Drehen der Bildaufnahmeeinrichtung (18),
wobei die erste Ausrichtungseinrichtung (13) am Flugkörper (11) derart montiert ist, dass sie von einer horizontalen Mitte oder einem Schwerpunkt des Flugkörpers (11) weg in eine beliebige Richtung versetzt ist,
wobei die zweite Ausrichtungseinrichtung (19) am Flugkörper (11) derart montiert ist, dass sie in eine Richtung versetzt ist, die der Richtung entgegengesetzt ist, in der die erste Ausrichtungseinrichtung (13) montiert ist,
wobei eine erste Balanceeinstelleinrichtung (17) zum Einstellen eines Massenausgleichs derart vorgesehen ist, dass der Flugkörper (11) an der Mittelposition oder an der Schwerpunktposition ausbalanciert ist,
wobei die Drehwelle (131) an der Position eines Schwerpunkts eines Objekts angeordnet ist, wobei das Objekt die Inspektionseinrichtung (12), die Armeinrichtung (16) und eine zweite Balanceeinstelleinrichtung (14) aufweist.

2. Defektinspektionsvorrichtung nach Anspruch 1, wobei die Bildaufnahmeeinrichtung (18) in der Lage ist, Bilder des Inspektionszielbereichs der zu inspizierenden Struktur derart aufzunehmen, dass sie in der gleichen Richtung wie die Inspektionseinrichtung ausgerichtet sind.

3. Defektinspektionsvorrichtung nach einem der Ansprüche 1 oder 2, wobei die Inspektionseinrichtung (12) eine Klopfinspektion der Wandoberfläche, eine Hohlrauminspektion für ein Inneres der Wand oder eine Defektinspektion für das Innere der Wand ausführt.

4. Defektinspektionsverfahren unter Verwendung einer Defektinspektionsvorrichtung mit:
einem Flugkörper (11), der in der Lage ist, sich frei im Raum zu bewegen;
einer auf dem Flugkörper (11) bereitgestellten Inspektionseinrichtung (12) zum Inspizieren einer Wand eines Inspektionszielbereichs einer zu inspizierenden Struktur;
einer Armeinrichtung (16), an der die Inspektionseinrichtung (12) an einem Ende befestigt ist;
einer ersten Ausrichtungseinrichtung (13) mit einer Drehwelle (131) zum Steuern einer Richtung der Inspektionseinrichtung durch Drehen der Armeinrichtung (16);
einer Bildaufnahmeeinrichtung (18), die auf dem Flugkörper (11) vorgesehen ist und Bilder des Inspektionszielbereichs der zu inspizierenden Struktur aufnimmt; und
einer zweiten Ausrichtungseinrichtung (19) zum Steuern einer Aufnahmerichtung zum Aufnehmen von Bildern durch die Bildaufnahmeeinrichtung (18) durch Drehen der Bildaufnahmeeinrichtung (18),
wobei die erste Ausrichtungseinrichtung (13) am Flugkörper (11) derart montiert ist, dass sie von einer horizontalen Mitte oder einem Schwerpunkt des Flugkörpers (11) weg in eine beliebige Richtung versetzt ist,
wobei die zweite Ausrichtungseinrichtung (19) am Flugkörper (11) derart montiert ist, dass sie in eine Richtung versetzt ist, die der Richtung entgegengesetzt ist, in der die erste Ausrichtungseinrichtung (13) montiert ist,
wobei eine erste Balanceeinstelleinrichtung (17) zum Einstellen eines Massenausgleichs derart vorgesehen ist, dass der Flugkörper (11) in der Mittelposition oder in der Schwerpunktposition ausbalanciert ist,
wobei die Drehwelle (131) an einer Position des Schwerpunkts eines Objekts angeordnet ist, wobei das Objekt die Inspektionseinrichtung (12), die Armeinrichtung (16) und eine zweite Balanceeinstelleinrichtung (14) aufweist,
wobei das Verfahren die Schritte aufweist:
Veranlassen, dass die Inspektionseinrichtung (12) durch den Flugkörper (11) in die Nähe der zu inspizierenden Struktur gebracht wird;
Aufnehmen von Bildern der Inspektionszielbereiche der zu inspizierenden Struktur durch die Bildaufnahmeeinrichtung (18); und
Veranlassen, dass die Inspektionseinrichtung (12) mit dem Inspektionszielbereich der zu inspizierenden Struktur unter Verwendung der ersten Ausrichtungseinrichtung (13) in Kontakt gebracht wird, um dadurch die Wand der zu inspizierenden Struktur durch die Inspektionseinrichtung (12) zu inspizieren.

5. Defektinspektionsprogramm, das veranlasst, dass eine Defektinspektionsvorrichtung mit:
einem Flugkörper (11), der in der Lage ist, sich frei im Raum zu bewegen;
einer auf dem Flugkörper (11) bereitgestellten Inspektionseinrichtung (12) zum Inspizieren einer Wand eines Inspektionszielbereichs einer zu inspizierenden Struktur;
einer Armeinrichtung (16), an der die Inspektionseinrichtung (12) an einem Ende befestigt ist;
einer ersten Ausrichtungseinrichtung (13) mit einer Drehwelle (131) zum Steuern einer Richtung der Inspektionseinrichtung (12) durch Drehen der Armeinrichtung (16);
einer Bildaufnahmeeinrichtung (18), die auf dem Flugkörper (11) vorgesehen ist und Bilder des Inspektionszielbereichs der zu inspizierenden Struktur aufnimmt; und
einer zweiten Ausrichtungseinrichtung (19) zum Steuern einer Aufnahmerichtung zum Aufnehmen von Bildern durch die Bildaufnahmeeinrichtung (18) durch Drehen der Bildaufnahmeeinrichtung (18),
wobei die erste Ausrichtungseinrichtung (13) am Flugkörper (11) derart montiert ist, dass sie von einer horizontalen Mitte oder einem Schwerpunkt des Flugkörpers (11) weg in eine beliebige Richtung versetzt ist,
wobei die zweite Ausrichtungseinrichtung (19) am Flugkörper (11) derart montiert ist, dass sie in die Richtung versetzt ist, die der Richtung entgegengesetzt ist, in der die erste Ausrichtungseinrichtung (13) montiert ist,
wobei eine erste Balanceeinstelleinrichtung (17) zum Einstellen eines Massenausgleichs derart vorgesehen ist, dass der Flugkörper (11) an der Mittelposition oder an der Schwerpunktposition ausbalanciert ist,
wobei die Drehwelle (131) an der Position eines Schwerpunkts eines Objekts angeordnet ist, wobei das Objekt die Inspektionseinrichtung (12), die Armeinrichtung (16) und eine zweite Balanceeinstelleinrichtung (14) aufweist,
funktioniert als:
eine Einrichtung zum Veranlassen, dass die Inspektionseinrichtung (12) durch den Flugkörper (11) in die Nähe der zu inspizierenden Struktur gebracht wird; und
eine Einrichtung zum Aufnehmen von Bildern des Inspektionszielbereichs der zu inspizierenden Struktur durch Steuern der Bildaufnahmeeinrichtung (18); und
eine Einrichtung zum Veranlassen, dass die Inspektionseinrichtung (12) mit dem Inspektionszielbereich der zu inspizierenden Struktur durch Steuern der ersten Ausrichtungseinrichtung (13) in Kontakt gebracht wird, um dadurch die Wand der zu inspizierenden Struktur durch die Inspektionseinrichtung (12) zu inspizieren.

## Revendications

1. Dispositif d'inspection de défauts, comprenant :
un corps volant (11) capable de se déplacer librement dans l'espace ;
un moyen d'inspection (12) pour inspecter une paroi d'une zone cible d'inspection d'une structure d'inspection prévu sur le corps volant (11) ;
un moyen formant bras (16) auquel le moyen d'inspection (12) est attaché à une extrémité ; et
un premier moyen de direction (13) ayant un arbre de rotation (131) pour contrôler une direction du moyen d'inspection en faisant tourner le moyen formant bras (16) ;
un moyen d'imagerie (18) qui est prévu sur le corps volant (11) et capture des images de la zone cible d'inspection de la structure d'inspection ; et
un second moyen de direction (19) pour contrôler une direction d'une capture d'images effectuée par le moyen d'imagerie (18), en faisant tourner le moyen d'imagerie (18),
dans lequel le premier moyen de direction (13) est monté sur le corps volant (11) de sorte à être écarté dans n'importe quelle direction par rapport à un centre horizontal ou centre de gravité du corps volant (11),
dans lequel le second moyen de direction (19) est monté sur le corps volant (11) de sorte à être écarté dans la direction opposée à la direction dans laquelle est monté le premier moyen de direction (13),
dans lequel un premier moyen de réglage d'équilibre (17) est prévu pour régler un équilibre des masses de sorte que le corps volant (11) est équilibré à la position centrale ou la position de centre de gravité,
dans lequel l'arbre de rotation (131) est agencé à la position d'un centre de gravité d'un objet, dans lequel ledit objet comprend le moyen d'inspection (12), le moyen formant bras (16) et un second moyen de réglage d'équilibre (14).

2. Dispositif d'inspection de défauts selon la revendication 1, dans lequel le moyen d'imagerie (18) est capable de capturer des images de la zone cible d'inspection de la structure d'inspection, de sorte à être orienté dans la même direction que le moyen d'inspection.

3. Dispositif d'inspection de défauts selon l'une quelconque des revendications 1 à 2, dans lequel le moyen d'inspection (12) effectue une inspection par tapotement de la surface de paroi, une inspection de vides pour un intérieur de la paroi ou une inspection de défauts pour l'intérieur de la paroi.

4. Procédé d'inspection de défauts utilisant un dispositif d'inspection de défauts comprenant : un corps volant (11) capable de se déplacer librement dans l'espace ; un moyen d'inspection (12) pour inspecter une paroi d'une zone cible d'inspection d'une structure d'inspection prévu sur le corps volant (11) ; un moyen formant bras (16) auquel le moyen d'inspection (12) est attaché à une extrémité ; un premier moyen de direction (13) ayant un arbre de rotation (131) pour contrôler une direction du moyen d'inspection en faisant tourner le moyen formant bras (16) ; un moyen d'imagerie (18) qui est prévu sur le corps volant (11) et capture des images de la zone cible d'inspection de la structure d'inspection ; et un second moyen de direction (19) pour contrôler une direction d'une capture d'images effectuée par le moyen d'imagerie (18) en faisant tourner le moyen d'imagerie (18),
dans lequel le premier moyen de direction (13) est monté sur le corps volant (11) de sorte à être écarté dans n'importe quelle direction par rapport à un centre horizontal ou centre de gravité du corps volant (11),
dans lequel le second moyen de direction (19) est monté sur le corps volant (11) de sorte à être écarté dans la direction opposée à la direction dans laquelle est monté le premier moyen de direction (13),
dans lequel un premier moyen de réglage d'équilibre (17) est prévu pour régler un équilibre des masses de sorte que le corps volant (11) est équilibré à la position centrale ou à la position de centre de gravité,
dans lequel l'arbre de rotation (131) est agencé à une position du centre de gravité d'un objet, dans lequel ledit objet comprend le moyen d'inspection (12), le moyen formant bras (16) et un second moyen de réglage d'équilibre (14),
le procédé incluant :
le rapprochement du moyen d'inspection (12) de la structure d'inspection grâce au corps volant (11) ;
la capture d'images des zones cibles d'inspection de la structure d'inspection grâce au moyen d'imagerie (18), et
la mise en contact du moyen d'inspection (12) avec la zone cible d'inspection de la structure d'inspection à l'aide du premier moyen de direction (13), pour inspecter ainsi la paroi de la structure d'inspection grâce au moyen d'inspection (12).

5. Programme d'inspection de défauts, qui amène
un dispositif d'inspection de défauts incluant un corps volant (11) capable de se déplacer librement dans l'espace ; un moyen d'inspection (12) pour inspecter une paroi d'une zone cible d'inspection d'une structure d'inspection prévu sur le corps volant (11) ; un moyen formant bras (16) auquel le moyen d'inspection (12) est attaché à une extrémité ; un premier moyen de direction (13) ayant un arbre de rotation (131) pour contrôler une direction du moyen d'inspection (12) en faisant tourner le moyen formant bras (16) ; un moyen d'imagerie (18) qui est prévu sur le corps volant (11) et capture des images de la zone cible d'inspection de la structure d'inspection ; et un second moyen de direction (19) pour contrôler une direction d'une capture d'images effectuée par le moyen d'imagerie (18) en faisant tourner le moyen d'imagerie (18),
dans lequel le premier moyen de direction (13) est monté sur le corps volant (11) de sorte à être écarté dans n'importe quelle direction par rapport à un centre horizontal ou centre de gravité du corps volant (11),
dans lequel le second moyen de direction (19) est monté sur le corps volant (11) de sorte à être écarté dans la direction opposée à la direction dans laquelle est monté le premier moyen de direction (13),
dans lequel un premier moyen de réglage d'équilibre (17) est prévu pour régler un équilibre des masses de sorte que le corps volant (11) est équilibré à la position centrale ou à la position de centre de gravité,
dans lequel l'arbre de rotation (131) est agencé à la position d'un centre de gravité d'un objet, dans lequel ledit objet comprend le moyen d'inspection (12), le moyen formant bras (16) et un second moyen de réglage d'équilibre (14),
à fonctionner comme :
un moyen pour rapprocher le moyen d'inspection (12) de la structure d'inspection en contrôlant le corps volant (11) ; et
un moyen pour capturer des images de la zone cible d'inspection de la structure d'inspection en contrôlant le moyen d'imagerie (18) ; et
un moyen pour mettre le moyen d'inspection (12) en contact avec la zone cible d'inspection de la structure d'inspection en contrôlant le premier moyen de direction (13), pour inspecter ainsi la paroi de la structure d'inspection grâce au moyen d'inspection (12) .
